# EUROPÄISCHE PATENTSCHRIFT

(11) **EP 3 871 829 B1**
(45) Veröffentlichungstag und Bekanntmachung des Hinweises auf die Patenterteilung: **16.11.2022**
(21) Anmeldenummer: 21020089.5
(22) Anmeldetag: 23.02.2021
(51) Int. Cl.: B23P 19/06, B25B 29/02, F03D 13/10, F03D 13/20, F03D 80/50

(54) **VERFAHREN ZUM ANZIEHEN VON SCHRAUBVERBINDUNGEN, MEHRFACHSCHRAUBVORRICHTUNG**
METHOD FOR TIGHTENING SCREW CONNECTIONS, MULTIPLE SCREW DEVICE
PROCÉDÉ DE SERRAGE DE RACCORDS À VIS, DISPOSITIF À VIS MULTIPLES

(30) Priorität: 27.02.2020 DE 102020105104
(43) Veröffentlichungstag der Anmeldung: 01.09.2021
(73) Patentinhaber: Hohmann, Jörg, 59872 Meschede (DE); Hohmann, Frank, 59581 Warstein (DE)
(72) Erfinder:
(74) Vertreter: Janke Scholl Patentanwälte PartG mbB

(56) Entgegenhaltungen:
- EP-A1- 2 671 673
- EP-A1- 3 769 904
- EP-B1- 2 607 685
- WO-A2-2008/092768
- JP-A- H01 103 240
- JP-A- H01 216 730
- JP-A- H06 206 128

## Beschreibung

Die Erfindung betrifft ein Verfahren zum Anziehen von Schraubverbindungen, deren Schraubenachsen in zueinander festgelegten Positionen angeordnet sind und die sich jeweils aus einem Gewindebolzen und einer auf dessen Gewinde aufgeschraubten und gegenüber einer Unterlage abgestützten Mutter zusammensetzen.

Die Erfindung betrifft ferner eine Mehrfachschraubvorrichtung, wobei diese für ein Verfahren zum Anziehen von Schraubverbindungen besonders geeignet ist.

Ein Verfahren zum Anziehen von Schraubverbindungen unter Einsatz einer Schraubvorrichtung ist aus der EP 2 607 685 B1 bekannt. Die Vorrichtung ist dazu ausgebildet, eine Vielzahl in Reihe entlang eines Flansches angeordneter Schraubverbindungen nacheinander anzuziehen oder nachzuziehen. Jede Schraubverbindung setzt sich aus einem Gewindebolzen und einer auf dessen Gewinde aufgeschraubten Mutter zusammen, wobei die Mutter gegen die Oberseite des Flansches abgestützt ist. Das Anziehen der Schraubverbindung durch Dehnen sowie das anschließende Drehen der Mutter relativ zu dem Flansch erfolgt mittels eines Schraubwerkzeugs, welches auf einem selbstfahrenden Fahrzeug angeordnet ist. Um das Schraubwerkzeug oberhalb der jeweils anzuziehenden Schraubverbindung zu positionieren, verfügt das Fahrzeug über einen Positionssensor. Aufgrund dessen Positionssignalen wird das Fahrzeug mit dem darauf angeordneten Schraubwerkzeug kontrolliert gefahren, bis sich aus den Signalen ergibt, dass sich das Schraubwerkzeug in axialer Ausrichtung zur Schraubenachse der Schraubverbindung befindet. Zu diesem Zweck werden die Positionssignale des Positionssensors in einer Steuereinheit zu Signalen für den Antrieb des Fahrzeugs verarbeitet. Die Steuereinheit ist außerdem dazu ausgebildet, den Prozess des Dehnens sowie des Nachziehens der Mutter zu kontrollieren.

Aus der WO 2008/092768 A2 ist ebenfalls ein Verfahren zum Anziehen von in einer Reihe aufeinanderfolgend angeordneter Schraubverbindungen bekannt. Das Anziehen der Schraubverbindungen erfolgt mit gleich mehreren, parallel geschalteten Schraubwerkzeugen. Jedes der Schraubwerkzeuge weist einen Hydraulikanschluss auf, der mit einem gemeinsamen Hydraulikaggregat hydraulisch verbunden ist. Die Spannvorrichtungen sind daher für einen Parallelbetrieb in einer hydraulischen Parallelschaltung angeschlossen.

Die WO 2008/092768 A2 offenbart ein Verfahren zum Anziehen von Schraubverbindungen gemäß dem Oberbegriff des Anspruchs 1 und eine Mehrfachschraubvorrichtung für Schraubverbindungen.gemäß dem Oberbegriff des Anspruchs 12.

Eine Schraubvorrichtung, bei der mehrere Schraubwerkzeuge gemeinsam entlang von in Reihe angeordneten Schraubverbindungen transportierbar und bis in eine Position oberhalb dieser Schraubverbindungen fahrbar sind, ist aus der EP 2 671 673 A1 bekannt. Die Schraubwerkzeuge arbeiten hydraulisch, indem der Gewindebolzen der jeweiligen Schraubverbindung zunächst mechanisch längsgedehnt wird.

Die bekannten Verfahren und Vorrichtungen eignen sich für in einer Reihe aufeinanderfolgend angeordnete Schraubverbindungen, wie sie z. B typisch sind für Flanschverschraubungen, welche einzelne Turmabschnitte einer Windkraftanlage miteinander verbinden. Dabei stützt sich ein Ringflansch eines oberen Turmabschnitts auf dem Ringflansch eines darunter angeordneten Turmabschnitts der Windkraftanlage ab. Die Flansche sind mittels einer Vielzahl von Schraubverbindungen, die in Reihe gleichmäßig über den Umfang der Flansche verteilt angeordnet sind, miteinander verschraubt.

Weniger geeignet oder sogar ungeeignet sind die bekannten Verfahren und Vorrichtungen in Fällen, in denen die Schraubverbindungen nicht gleichmäßig aufeinanderfolgend in einer Reihe angeordnet sind, sondern in anderen Positionen zueinander.

Aufgabe der Erfindung ist die Bereitstellung eines mit einer Mehrfachschraubvorrichtung ausführbaren Verfahrens, welches sich nicht nur zum Anziehen von in einer Reihe aufeinanderfolgend angeordneten Schraubverbindungen eignet, sondern ebenso zum Anziehen von Schraubverbindungen, deren Schraubenachsen in anderen Positionen zueinander angeordnet sind. Ferner soll eine geeignete Mehrfachschraubvorrichtung geschaffen werden.

Zur Lösung dieser Aufgabe wird ein Verfahren zum Anziehen von Schraubverbindungen mit den Merkmalen des Patentanspruchs 1 vorgeschlagen.

Bei diesem Verfahren kommt eine mindestens zwei Schraubwerkzeuge aufweisende Mehrfachschraubvorrichtung zum Einsatz, wobei die Schraubwerkzeuge jeweils aufweisen
- eine in dem Schraubwerkzeug um eine Werkzeugachse drehbar angeordnete Wechselbuchse, an der ein mit einem Längsabschnitt des Gewindes verschraubbares Zuggewinde ausgebildet ist,
- einen Drehantrieb zum Auf- und Abschrauben der Wechselbuchse auf das Gewinde bzw. von dem Gewinde,
- Mittel zum Längsdehnen des Gewindebolzens durch Zugausübung der Wechselbuchse längs der Werkzeugachse,
- ein mit der Mutter koppelbares Formschlusswerkzeug zum Nachziehen der Mutter.

Die Schraubwerkzeuge sind jeweils mittels eines Längsantriebs in Längsrichtung ihrer Werkzeugachsen verfahrbar und damit beweglich ausgebildet. Und mittels mindestens eines Stellantriebs sind die Schraubwerkzeuge relativ zueinander in einer Richtung beweglich, die rechtwinklig zu mindestens einer der Werkzeugachsen ist.

Zu einem Zeitpunkt sind gleichzeitig beide Schraubwerkzeuge gegenüber der Unterlage abgestützt. Zu diesem Zeitpunkt sind die Wechselbuchse des ersten Schraubwerkzeugs sowie die Wechselbuchse des zweiten Schraubwerkzeugs jeweils auf das Gewinde eines Gewindebolzens aufgeschraubt, und in beiden Schraubwerkzeugen sind die Mittel zum Längsdehnen des jeweiligen Gewindebolzens aktiviert, d. h. beide Wechselbuchsen üben, vorzugsweise mittels Hydraulikdruck, Zug auf den jeweiligen Gewindebolzen aus.

Es schließen sich dann, bei unveränderter Position des zunächst weiterhin aktivierten, d. h. am Gewindebolzen Zug ausübenden zweiten Schraubwerkzeugs, und nach der Deaktivierung des ersten Schraubwerkzeugs folgende Schritte an:
a) mittels des Drehantriebs Abschrauben der Wechselbuchse des ersten Schraubwerkzeugs von dem Gewindebolzen und mittels des Längsantriebs Anheben des ersten Schraubwerkzeugs;
b) mittels des Stellantriebs Bewegen des ersten Schraubwerkzeugs relativ zu dem zweiten Schraubwerkzeug bis in eine neue Position, in der die Werkzeugachse des ersten Schraubwerkzeugs zu der Schraubenachse eines weiteren Gewindebolzens fluchtet;
c) in der neuen Position mittels des Längsantriebs Absenken des ersten Schraubwerkzeugs und, mittels des Drehantriebs, Aufschrauben der Wechselbuchse auf den weiteren Gewindebolzen;
d) Längsdehnen des weiteren Gewindebolzens durch Zugausübung der Wechselbuchse und, unter Aufrechterhalten des Längsdehnens, Nachziehen der Mutter;
e) Wiederholen der Schritte a) bis d), diesmal für das zweite Schraubwerkzeug und bei unveränderter Position des ersten Schraubwerkzeugs.

Frühestens während des Schritts d), also nach dem Beginn der Zugausübung an dem weiteren Gewindebolzen, erfolgt die Deaktivierung des zweiten Schraubwerkzeugs. Indem zu jedem Zeitpunkt zumindest eines der Schraubwerkzeuge durch eingespeisten Hydraulikdruck aktiviert ist und sich daher dieses Schraubwerkzeug unter starkem Druck gegenüber der Unterlage abstützt, wird ein hohes Maß an Exaktheit bei der sich abwechselnden Umpositionierung der Schraubwerkzeuge erreicht.

Zur Lösung der Aufgabe wird ferner eine Mehrfachschraubvorrichtung für Schraubverbindungen mit den Merkmalen des Patentanspruchs 12 vorgeschlagen.

Diese Mehrfachschraubvorrichtung ist dadurch gekennzeichnet, dass die Schraubwerkzeuge jeweils mittels eines Längsantriebs in Längsrichtung ihrer Werkzeugachsen beweglich ausgebildet sind, und dass die Schraubwerkzeuge mittels mindestens eines Stellantriebs relativ zueinander in einer Richtung beweglich sind, die rechtwinklig zu mindestens einer der Werkzeugachsen ist.

Vorteilhafte Ausführungsbeispiele des Verfahrens bzw. der Mehrfachschraubvorrichtung sind in den abhängigen Ansprüchen 2 bis 11 bzw. 13 bis 24 angegeben.

Das beanspruchte Verfahren und die beanspruchte Vorrichtung eignen sich nicht nur zum Anziehen von in einer Reihe zueinander angeordneten Schraubverbindungen, sondern ebenso zum aufeinanderfolgenden Anziehen solcher Schraubverbindungen, deren Schraubenachsen in anderen Positionen zueinander angeordnet sind, z. B. indem die Schraubenachsen quer oder schräg zueinander versetzt angeordnet sind und/oder indem die Abstände von Schraubverbindung zu Schraubverbindung variieren.

Von zusätzlichem Vorteil ist, dass sich das Verfahren nicht nur für das Nachziehen von im Wesentlichen vertikalen Verschraubungen eignet, sondern auch für deutlich gegenüber der Vertikalen angewinkelte Verschraubungen und sogar für Schraubverbindungen mit zum Beispiel horizontaler Schraubenachse und für Über-Kopf-Verschraubungen. Sind die Schraubverbindungen z. B. Flanschverbindungen, kann die Ausrichtung des Flansches nicht nur horizontal, sondern auch gekippt oder sogar vertikal sein.

Insgesamt wird daher ein gegenüber dem Stand der Technik flexibleres Verfahren zum Anziehen von Schraubverbindungen mit breitem Einsatzbereich geschaffen. Ebenfalls durch hohe Flexibilität in unterschiedlichen Anwendungssituationen zeichnet sich die in besonderer Weise ausgebildete Mehrfachschraubvorrichtung aus.

Von Bedeutung ist, dass die mindestens zwei Schraubwerkzeuge der Vorrichtung mittels des mindestens einmal vorhandenen Stellantriebs in einer Richtung quer zu ihren Werkzeugachsen relativ zueinander beweglich sind. Bei Betätigung des Stellantriebs behält also eines der Schraubwerkzeuge seine Position und seine Drehlage bei, wohingegen das andere Schraubwerkzeug eine Bewegung rechtwinklig bzw. quer zu seiner eigenen Werkzeugachse durchführt. Im Ergebnis kommt es zu einer Relativbewegung der Schraubwerkzeuge.

Ebenfalls von Bedeutung ist, dass zu jedem Zeitpunkt des Verschraubungsprozesses zumindest eines der Schraubwerkzeuge mit dem jeweiligen Gewindebolzen fest verbunden ist. Dadurch ist zu jedem Zeitpunkt eine Fix-Position an einem bestimmten Ort sichergestellt. Wegen der Fix-Position kann zugleich das andere oder ein anderes Schraubwerkzeug durch Betätigung des Stellantriebs bis in eine neue Position über einem weiteren, noch nicht nachgezogenen Gewindebolzen bewegt werden, in der dann die Werkzeugachse dieses anderen Schraubwerkzeugs mit dem weiteren Gewindebolzen fluchtet. Die Bewegung in diese neue Position erfolgt mit hoher Genauigkeit, da während der Neupositionierung das erste Schraubwerkzeug seinen starren Eingriff an seinem Gewindebolzen, sein Abstützen auf der Unterlage und damit im Ergebnis seine Fix-Position und seine Drehlage beibehält.

Insgesamt ist daher das Verfahren durch ein wiederholtes Umsetzen in jeweils eine neue Verschraubungsposition gekennzeichnet und ist daher ein "schreitendes" Verfahren, bei dem jederzeit eine starre Verbindung an einer Fix-Position sichergestellt ist und diese Verbindung frühestens dann aufgegeben bzw. gelöst wird, wenn an einer anderen Position eine starre Verbindung durch Verschrauben auf dem jeweiligen weiteren Gewindebolzen sichergestellt ist.

Das Längsdehnen des Gewindebolzens durch Zugausübung der Wechselbuchse längs der Werkzeugachse kann aufeinanderfolgend, zeitlich teilweise überlappend oder parallel, also zeitgleich, durchgeführt werden. Im ersteren Fall folgt das Vorspannen zweier Gewindebolzen nacheinander, im zweiten Fall erfolgt das Vorspannen zur gleichen Zeit. Ebenso möglich ist es, dass z. B. zwei Schraubwerkzeuge arbeiten, während ein weiteres, drittes Schraubwerkzeug sich gerade neu, also über einer weiteren Schraubenachse, positioniert.

Zum Erkennen der genauen Lage der nächsten Verschraubungsposition können Sensoren eingesetzt werden. Deren Sensorik kann entweder zum Erkennen des jeweils zu dehnenden Bolzens selbst ausgebildet sein, oder zum Erkennen eines benachbarten oder zweier benachbarter Bolzen. Das Erkennen der Schraubverbindung kann auch z. B unterhalb des jeweiligen Flansches erfolgen, wenn sich dort z. B. ein Bolzenkopf der Schraubverbindung befindet.

Daher wird mit einer Ausgestaltung des Verfahrens und der Vorrichtung eine Robotersteuerung zum Bewegen des jeweiligen Schraubwerkzeugs bis in die neue Position vorgeschlagen, wobei die Robotersteuerung sensorgesteuert mittels eines zur Positionsortung der Gewindebolzen ausgebildeten Sensors erfolgt.

Für den quer zur Schraubenachse versetzenden Stellantrieb wird eine elektrische, hydraulische oder pneumatische Betätigung vorgeschlagen. Auch für die in Schraubenlängsrichtung arbeitenden Längsantriebe wird eine elektrische, hydraulische oder pneumatische Betätigung vorgeschlagen.

Mittels des ein- oder mehrfach vorhandenen Stellantriebs wird der Abstand der Werkzeugachsen zueinander verändert. Die Abstandsveränderung der Werkzeugachsen kann auf verschiedene Weise erfolgen. Zum Beispiel kann die Abstandsveränderung in einer linearen d. h. geradlinigen Bewegung oder in einem geradlinigen Bewegungsprozess erfolgen. Dies ist dann von Vorteil, wenn die Schraubverbindungen im Wesentlichen in einer Reihe angeordnet sind.

In einer anderen Variante wird das Verändern des Abstands der Werkzeugachsen in einer nichtlinearen Bewegung durchgeführt und insbesondere durch eine bogenförmige Bewegung oder durch die Kombination zweier oder mehrerer bogenförmiger Bewegungen. Jede bogenförmige Bewegung ist in ihrer einfachsten Ausgestaltung eine Bewegung entlang einer Kreisbahn.

Vorzugsweise sind die Schraubwerkzeuge an einem gemeinsamen Träger angeordnet. In diesem Fall erfolgen die bogenförmigen Bewegungen durch ein Schwenken der Schraubwerkzeuge gegenüber dem Träger. Möglich ist auch ein gleichzeitiges Schwenken der Schraubwerkzeuge mit einander gegensinniger Schwenkrichtung. Dies kann simultan oder nicht-simultan erfolgen.

Die Schraubwerkzeuge können jeweils am freien Ende eines Arms befestigt sein, der um eine an dem Träger angeordnete Achse schwenkbar ist. Die Längsantriebe sind voneinander unabhängig ausgebildet, den jeweiligen Arm parallel zur Werkzeugachse zu bewegen.

Ferner wird vorgeschlagen, dass das Auf- und Abschrauben der Wechselbuchse mittels eines Drehantriebs durchgeführt wird. Jedem Schraubwerkzeug ist vorzugsweise ein eigener Drehantrieb zugeordnet, der also unabhängig vom Drehantrieb des anderen Werkzeugs bzw. der anderen Werkzeuge arbeitet.

Ferner wird eine Verdrehsicherung vorgeschlagen. Diese ist ausgebildet, ein Mitdrehen des Gewindebolzens zu verhindern, wenn und während die Wechselbuchse auf das Gewinde des Gewindebolzens aufgeschraubt wird. Das Mitdrehen könnte zur Folge haben, dass es zu einem zu kurzen Gewindeeingriff zwischen Wechselbuchse und Bolzen kommt, was für den anschließenden Schraubenspannprozess eine große Gefahr sein kann.

Gekennzeichnet ist die Verdrehsicherung durch ein zwischen einer Ruheposition und einer Gegenhalteposition vor- und zurückbeweglich ausgebildetes Haltewerkzeug. Für zumindest die Zeitdauer des Nachziehens/Beidrehens der Mutter wird eine an dem Haltewerkzeug ausgebildete Gegenhaltefläche zu einer drehsichernden Anlage an dem Gewindebolzen gebracht, wobei es sich versteht, dass der Ort dieser Anlage ein anderer ist als der mit der Wechselbuchse verschraubte Längsabschnitt des Gewindes.

Ferner vorgeschlagen wird eine Prozesssteuerung für das kontrollierte Bewegen des jeweiligen Schraubwerkzeugs bis in seine neue bzw. weitere Position. Vorzugsweise koordiniert und kontrolliert die Prozesssteuerung auch die übrigen Funktionen der Schraubwerkzeuge sowie vorzugsweise auch ein kontrolliertes Vor- und Zurückbewegen der zusätzlichen Haltewerkzeuge.

Vorzugsweise ist der Mehrfachschraubvorrichtung aus zwei Modulen aufgebaut, nämlich aus einem Werkzeugmodul, in dem die Schraubwerkzeuge einschließlich der Mittel zum Längsdehnen des Gewindebolzens und zum Nachziehen der Mutter, die Drehantriebe, die Längsantriebe und die Stellantriebe zusammengefasst sind, und aus einem räumlich getrennt angeordneten Versorgungsmodul. In dem Versorgungsmodul ist zumindest die Energieversorgung zum Betreiben der Mittel zum Längsdehnen der Gewindebolzen zusammengefasst. Bestandteil der Energieversorgung ist eine Versorgungsleitung, vorzugsweise in einer biegsamen Ausgestaltung, welche von dem Versorgungsmodul zu dem Werkzeugmodul führt.

Vorzugsweise ist Bestandteil des Versorgungsmoduls außerdem die vorzugsweise elektrische Energieversorgung für unter anderem die Drehantriebe, die Längsantriebe und die Stellantriebe. Als Bestandteil dieser Energieversorgung führt eine zweite, vorzugsweise biegsam ausgebildete Versorgungsleitung von dem Versorgungsmodul zu dem Werkzeugmodul.

Für eine weitgehend koordinierte Bewegung von Werkzeugmodul und Versorgungsmodul wird bei einer Ausgestaltung des Verfahrens und der Vorrichtung vorgeschlagen, dass das Versorgungsmodul, vorzugsweise über drehbar an dem Versorgungsmodul gelagerte Rollen oder Radelemente, parallel zu der Unterlage fahrbar ausgebildet ist, und dass das Versorgungsmodul über ein biegsam oder gelenkig ausgebildetes Druck- oder Zuggestänge mechanisch mit dem Werkzeugmodul verbunden ist.

Bei einer anderen Ausgestaltung von Verfahren und Vorrichtung wird das Versorgungsmodul fest an einer zentral gelegenen Position angeordnet, wobei sich das Werkzeugmodul um diese zentrale Position herum von Verschraubung zu Verschraubung bewegt. Auch bei dieser alternativen Ausgestaltung führt eine Versorgungsleitung, vorzugsweise in einer biegsamen Ausgestaltung, von dem Versorgungsmodul zu dem Werkzeugmodul. Um die Gewindebolzen gegen ein ungewolltes Mitdrehen während des Aufschraubens der Wechselbuchse zu sichern, ist die Mehrfachschraubvorrichtung mit einer Verdrehsicherung ausgestattet. Diese besteht aus einem Haltewerkzeug, an dem eine gegen den Gewindebolzen an einem Ort, der ein anderer als der mit der Wechselbuchse verschraubte Längsabschnitt des Gewindes ist, anlegbare Gegenhaltefläche ausgebildet ist. Das Gegenhaltewerkzeug ist zwischen einer Ruheposition und einer Gegenhalteposition, in welcher die Gegenhaltefläche zur drehsicheren Anlage an dem Gewindebolzen gelangt, vor- und zurückbeweglich. Die Vorwärtsbewegung bis zum Eingriff an dem Gewindebolzen kann entweder mittels eines motorischen Antriebs erfolgen, oder unter dem Druck eines Federmechanismus.

Jedes Schraubwerkzeug ist mit einem eigenen Haltewerkzeug und einem eigenen Antrieb für dieses Haltewerkzeug versehen. Vorzugsweise sind die Antriebe der Haltewerkzeuge mit der Bewegung der jeweiligen Schraubwerkzeuge parallel zu deren Werkzeugachsen gekoppelt.

Im Folgenden werden, unter Bezugnahme auf die Zeichnungen, Ausführungsbeispiele näher erläutert. Es zeigen:
- Figur 1: Eine perspektivische Innenansicht zweier Turmsegmente einer Windkraftanlage, wobei der durch verschraubte Ringflansche gebildete Verbindungsbereich der Turmsegmente jeweils nur als Halbschale wiedergegeben ist, sowie eine an den Ringflanschen angeordnete Mehrfachschraubvorrichtung zum Anziehen bzw. Nachziehen der Verschraubungen;
- Figur 2: die Einzeleinheit "A" der Figur 1 in vergrößerter Darstellung;
- Figur 3: die Gegenstände der Figuren 1 und 2 in einer anderen Ausführungsform;
- Figur 4: das Werkzeugmodul der Mehrfachschraubvorrichtung in einer perspektivischen Blickrichtung, die entgegengesetzt zu jener der Figuren 1, 2 und 3 ist;
- Figur 5: eine Seitenansicht des Werkzeugmoduls;
- Figur 6: eine Rückansicht des Werkzeugmoduls;
- Figur 7: eine Draufsicht auf das Werkzeugmodul;
- Figur 8: einen Teilschnitt durch eines der Schraubwerkzeuge der Mehrfachschraubvorrichtung in einer Situation, in der das Schraubwerkzeug auf den Gewindebolzen einer Schraubverbindung aufgeschraubt ist, und das Längsdehnen des Gewindebolzens beginnen kann;
- Figur 9: eine weitere Ausführungsform des Werkzeugmoduls, hier mit zusätzlich daran ausgebildeten Verdrehsicherungen;
- Figur 10: in drei Varianten a), b) und c) Verdrehsicherungen, welche an einen Gewindebolzen ansetzbar sind und diesen am Mitdrehen hindern, wobei im unteren Teil der Figur 10 jeweils die Einzelheit "A", "B" bzw. "C" wiedergegeben ist.

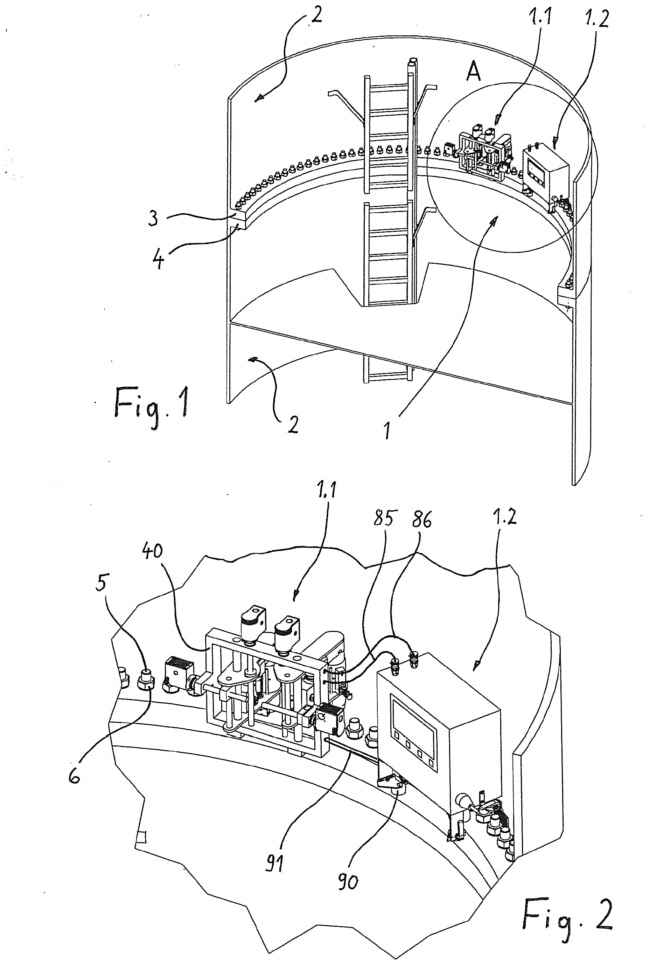

Figur 1 zeigt, hier zum Einsatz im Turm einer Windkraftanlage, eine im Folgenden auch kurz als Schraubroboter bezeichnete Mehrfachschraubvorrichtung 1, die sich zusammensetzt aus einem Werkzeugmodul 1.1 und einem separaten Versorgungsmodul 1.2. Der Einsatz erfolgt hier konkret im Verbindungsbereich zweier Turmabschnitte 2 der Windkraftanlage, um dort vorhandene Verschraubungen anzuziehen oder nachzuziehen. Ein Flansch 3 des jeweils oberen Turmabschnitts 2 stützt sich auf einem Flansch 4 des darunter angeordneten Turmabschnitts der Windkraftanlage ab. Die Flansche 3, 4 sind mittels Schraubverbindungen, die hier in Reihe gleichmäßig über den Umfang der Flansche 3, 4 verteilt angeordnet sind, miteinander verschraubt.

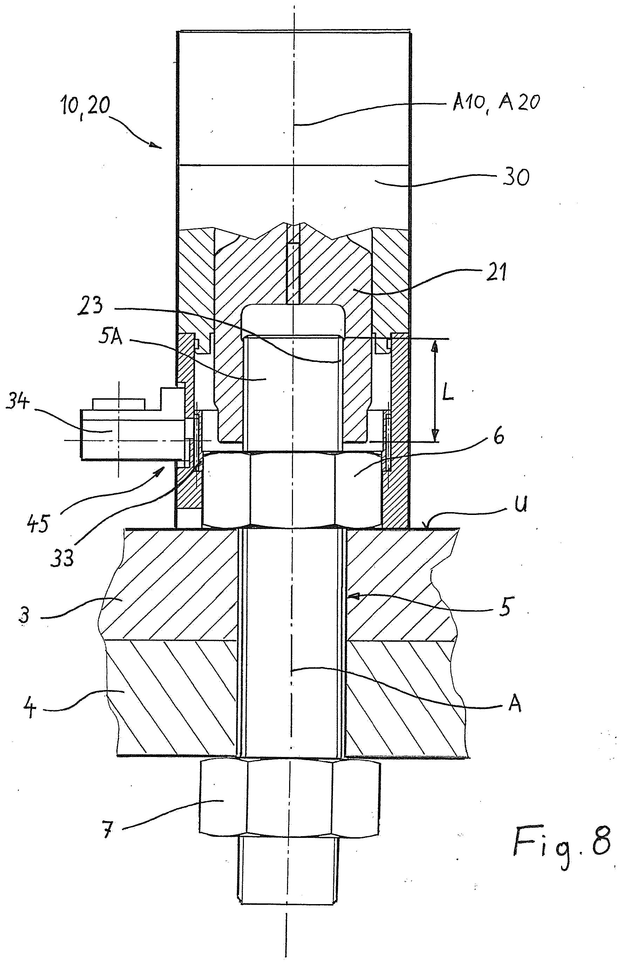

Figur 8 zeigt eine der Schraubverbindungen einschließlich der beiden Flansche 3, 4. Die Schraubverbindung befindet sich auf der Schraubenachse A und setzt sich hier zusammen aus einem Gewindebolzen 5, einer ersten darauf aufgeschraubten Mutter 6 und einer zweiten darauf aufgeschraubten Mutter 7. Die Mutter 6 liegt von oben gegen den Flansch 3 an, wobei diese Anlagefläche im Folgenden auch als Unterlage U bezeichnet wird. Die andere Mutter 7 liegt von unten gegen den anderen Flansch 4 an.

Anstelle der zweiten Mutter 7 kann der Gewindebolzen mit einem von unten gegen den Flansch 4 anliegenden, vergrößerten Bolzenkopf versehen sein, der Gewindebolzen 5 also als eine Kopfschraube ausgebildet sein.

Figur 8 zeigt ferner ein Schraubwerkzeug 10, 20 in der Ausführung als Schraubenspannzylinder. Der Schraubenspannzylinder vermag zwei Funktionen auszuüben: Er vermag den Gewindebolzen 5 in Längsrichtung zu dehnen, und er vermag, während des Dehnens, die dabei von der Unterlage U freigekommene Mutter 6 nachzuziehen. Dieses Nachziehen wird auch als Beidrehen bezeichnet.

Das Längsdehnen des Gewindebolzens 5 erfolgt in einer ausschließlich axialen Bewegung auf der Schraubenachse A der Schraubverbindung. Hierzu befindet sich in einem Zylindergehäuse 30 des Schraubenspannzylinders 10, 20 eine auf einer Werkzeugachse A10, A20, die mit der Schraubenachse A zusammenfällt, bewegliche Wechselbuchse 21. Die Wechselbuchse 21 ist, zum Verschrauben mit dem Gewinde 5A des Gewindebolzens, an ihrem Ende mit einem als Innengewinde ausgebildeten Zuggewinde 23 versehen.

Die Wechselbuchse 21 kann dauerhaft in dem Zylindergehäuse 30 angeordnet sein. Alternativ kann sie austauschbar angeordnet sein, damit sie, für Verschraubungen mit anderen Gewindegrößen, gegen eine entsprechend anders dimensionierte Wechselbuchse ausgetauscht werden kann.

Vor Beginn des Spannprozesses wird mittels eines Drehantriebs, der die Wechselbuchse 21 um ihre Werkzeugachse A10, A20 rotieren lässt, das Zuggewinde 23 der Wechselbuchse auf den über die Mutter 6 hinausragenden Gewindeendabschnitt des Gewindes 5A aufgeschraubt. Die Verschraubung führt dazu, dass das Zuggewinde 23 auf einem Längsabschnitt L mit dem Gewinde 5A verschraubt ist.

Mittels hydraulischer Kraft wird durch ausschließlich axialen Zug an dem Längsabschnitt L des Gewindes 5A der Gewindebolzen 5 längsgedehnt. Die dabei aufgewendete Anzugskraft und/oder der mittels einer Hydraulik aufgewendete Anzugsdruck kann z. B. in einem Dokumentationsmodul einer Prozesssteuereinheit gespeichert und so dokumentiert werden. Während bei hydraulisch aktivierter Spannvorrichtung die definierte Vorspannkraft auf den Gewindebolzen 5 ausgeübt wird, wird die Mutter 6 nachgezogen. Das dabei tatsächlich aufgewendete Dreh- bzw. Anzugsmoment sowie der Drehwinkel beim Nachziehen der Mutter 6 wird ebenfalls in dem Dokumentationsmodul gespeichert.

Das Aufschrauben der zentral in dem Zylindergehäuse 30 angeordneten Wechselbuchse 21 erfolgt mittels des vorzugsweise elektrisch angetriebenen Drehantriebs. Sodann wird die Wechselbuchse 21 unter Zug gesetzt, wodurch sich der Gewindebolzen 5 längt bzw. dehnt. Für die Zeitdauer des Dehnens kommt die Unterseite der Mutter 6 von der Unterlage U frei, so dass sich die Mutter 6 mit relativ wenig Drehwiderstand drehen und bis zur erneuten, spaltfreien Auflage auf der Unterlage U nachziehen bzw. beidrehen lässt. Dies erfolgt z. B. mit einem vorgegebenen Anzugsmoment, welches auch dokumentiert wird.

Der bereits erwähnte Drehantrieb oder ein weiterer Drehantrieb ist dazu ausgebildet, eine um die Mutter 6 herum angeordnete und diese formschlüssig mitnehmende Drehhülse 33 anzutreiben. Bestandteil des Antriebs für die Drehhülse 33 ist ferner ein Getriebe 34, welches durch eine Öffnung in dem Zylindergehäuse hindurch auf die Drehhülse 33 arbeitet und diese und damit die Mutter 6 in Drehung versetzt.

Umschlossen ist der hydraulische Spannmechanismus von dem druckfesten Zylindergehäuse 30. Dessen starre Fortsetzung in Richtung Unterlage U bildet ein die Mutter 6 umgebendes, nach unten offenes Stützrohr. Das Stützrohr kann Teil des Zylindergehäuses 30 sein oder alternativ ein gegenüber dem Zylindergehäuse 30 eigenständiges, z. B. drehfest daran angesetztes Bauteil. Zur Unterlage U hin ist das Stützrohr mit einer Stützfläche in Form eines die Mutter 6 umgebenden Rings versehen, um so hohe Stützkräfte auf die Unterlage U abführen zu können, die während der hydraulischen Druckbeaufschlagung das Widerlager bildet.

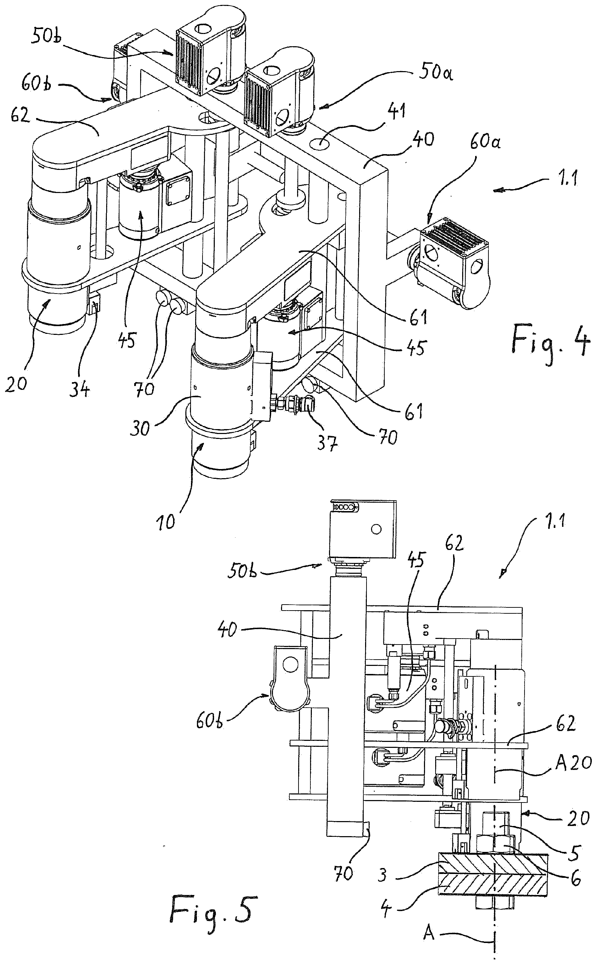

Seitlich an dem Zylindergehäuse 30 befindet sich ein Hydraulikanschluss 37 (Fig. 4), über den ein im Inneren des Zylindergehäuses 30 ausgebildeter hydraulischer Arbeitsraum eines Hydraulikzylinders mit einer Hydraulikpumpe in dem Versorgungsmodul 1.2 verbindbar ist.

In dem Hydraulikzylinder des Schraubwerkzeugs 10, 20 ist ein Kolben in Längsrichtung beweglich angeordnet. Durch Einspeisen von hydraulischem Druck in den Hydraulikzylinder hebt der Kolben entgegen der Kraft einer den Kolben beaufschlagenden Feder an. Die Feder ist bestrebt, den Kolben in seiner Grundstellung zu halten, in welcher der hydraulische Arbeitsraum sein Minimum hat.

Der Kolben ist zur axialen Mitnahme der Wechselbuchse 21 ausgebildet. Hierzu kann er mit einer Stufe versehen sein, an der sich die Wechselbuchse 21 abstützt. Speist die Hydraulikpumpe Druckfluid in den Arbeitsraum, so hebt der Kolben an und nimmt die Wechselbuchse 21 auf der Werkzeugachse A10, A20 mit. Dabei stützt sich das Zylindergehäuse 30 unter hohem Druck gegen die Unterlage U, die hierbei das Widerlager bildet. Es kommt zu dem beschriebenen Längsdehnen des Gewindebolzens 5.

Die Größe des von der Hydraulikpumpe bereitgestellten Drucks und der Druckzeitraum wird automatisch durch eine Prozesssteuereinheit eingestellt, mit der der Schraubroboter versehen ist, und die dessen wichtigste Funktionen koordiniert und steuert.

Anhand der Figuren 4 - 7 wird ein Beispiel eines konstruktiven Aufbaus des Werkzeugmoduls 1.1 der Mehrfachschraubvorrichtung 1 beschrieben, sowie das damit durchführbare Verschraubungsverfahren, einschließlich des prozessgesteuerten, automatischen Umsetzens an eine neue bzw. weitere Verschraubungsposition.

Bei diesem Ausführungsbeispiel ist das Werkzeugmodul 1.1 mit insgesamt zwei der bereits anhand der Fig. 8 erläuterten Schraubwerkzeuge in der Ausgestaltung als hydraulische Schraubenspannzylinder 10, 20 ausgestattet. Jedoch kann zur Durchführung des Verschraubungsverfahrens das Modul auch mit noch einem oder mehreren derartigen Schraubwerkzeugen ausgestattet sein.

Das Zylindergehäuse 30 des ersten Schraubwerkzeugs 10 ist starr an dem freien Ende eines ersten Arms 61 befestigt, der zu seiner Schwenkbarkeit auf einer Achse 41 gelagert ist, die ortsfest an einem Träger 40 angeordnet ist. Ebenso ist das Zylindergehäuse 30 des zweiten Schraubwerkzeugs 20 starr an dem freien Ende eines zweiten Arms 62 befestigt, der zu seiner Schwenkbarkeit auf einer zweiten Achse 42 gelagert ist, die ortsfest an dem Träger 40 angeordnet ist. Im Ergebnis ist jedes Schraubwerkzeug 10, 20 auf einem Bogen, der ein Kreisbogen ist, um die jeweilige Achse 41, 42 schwenkbar.

Der Träger 40 ist beim Ausführungsbeispiel ein Rahmen, durch den hindurch sich beide Arme 61 und 62 erstrecken. Dies bietet die Möglichkeit, zwecks höherer Festigkeit der Gesamtkonstruktion die Arme 61, 62 jeweils als zweistöckige Doppelarme auszubilden, an deren freien Enden die jeweiligen Zylindergehäuse 30 befestigt sind.

Jeder der zwei Arme 61, 62, insbesondere in der bevorzugten Bauart als zweistöckiger Doppelarm, bietet Platz zur Unterbringung eines Elektromotors, welcher als Drehantrieb 45 dient. Auf jedem Arm 61, 62 ist ein solcher Drehantrieb 45 angeordnet.

Der Drehantrieb 45 übernimmt beim Ausführungsbeispiel zwei Funktionen. Die erste Funktion ist die des Drehens der in dem Schraubwerkzeug 10 bzw. 20 angeordneten Wechselbuchse 21 um die Werkzeugachse A10 bzw. A20, um so die Wechselbuchse entweder auf einen Gewindebolzens 5 auf- oder von diesem abzuschrauben. Die zweite Funktion ist die des Drehens der Drehhülse 33 (Fig. 8) als jenes mit der Mutter 6 koppelbares Formschlusswerkzeug, welches die Mutter 6 nachzieht bzw. beidreht.

Damit der Drehantrieb 45 nacheinander beide Funktionen ausführen kann, ist bei der hier erläuterten Vorrichtung dem Elektromotor des Drehantriebs 45 ein Umschaltgetriebe nachgeschaltet. In dessen erster Schaltstellung treibt der Drehantrieb 45 nur die Wechselbuchse 21 an, und in der anderen Schaltstellung nur die Drehhülse 33. Auch dieses Umschalten kontrolliert die Robotersteuerung.

Alternativ kann die Vorrichtung mit einem ersten Antrieb für die Wechselbuchse 21 und einem zweiten, separaten Antrieb für die Drehhülse 33 ausgestattet sein.

Um unabhängig von der Rotation der jeweiligen Wechselbuchse 21 das Schraubwerkzeug 10, 20 auf die Schraubverbindung abzusenken bzw. wieder anzuheben, ist jedes Schraubwerkzeug 10, 20 mit einem eigenen Längsantrieb 50a bzw. 50b versehen. Der Längsantrieb 50a, 50b ist ausgebildet, den jeweiligen Arm 61, 62 und damit auch das Schraubwerkzeug relativ zu dem Träger 40 anzuheben und abzusenken.

Die zwei Längsantriebe 50a, 50b arbeiten unabhängig voneinander, so dass jeder Arm 61, 62 einschließlich des daran befestigten Zylindergehäuse 30 einzeln, also unabhängig von dem anderen Arm, angehoben und abgesenkt werden kann. Auch die Betätigung der Längsantriebe 50a, 50b erfolgt in Abhängigkeit von Steuersignalen der Robotersteuerung.

Das Bewegen der Arme 61, 62 relativ zu dem Träger 40 erfolgt mittels Stellantrieben 60a, 60b. Durch deren Betätigung führt das jeweilige Schraubwerkzeug 10, 20 eine Bewegung rechtwinklig und damit quer zu seiner eigenen Werkzeugachse A10, A20 durch. Dadurch kommt es zu einer Relativbewegung der Schraubwerkzeuge, bei der sich der Abstand der Werkzeugachsen A10, A20 verändert.

Durch Betätigung des Stellantriebs 60a wird der erste Arm 61 und damit das erste Schraubwerkzeug 10 um die Achse 41 verschwenkt. Durch Betätigung des weiteren Stellantriebs 60b wird der zweite Arm 62 und damit das zweite Schraubwerkzeug 20 um die Achse 42 verschwenkt.

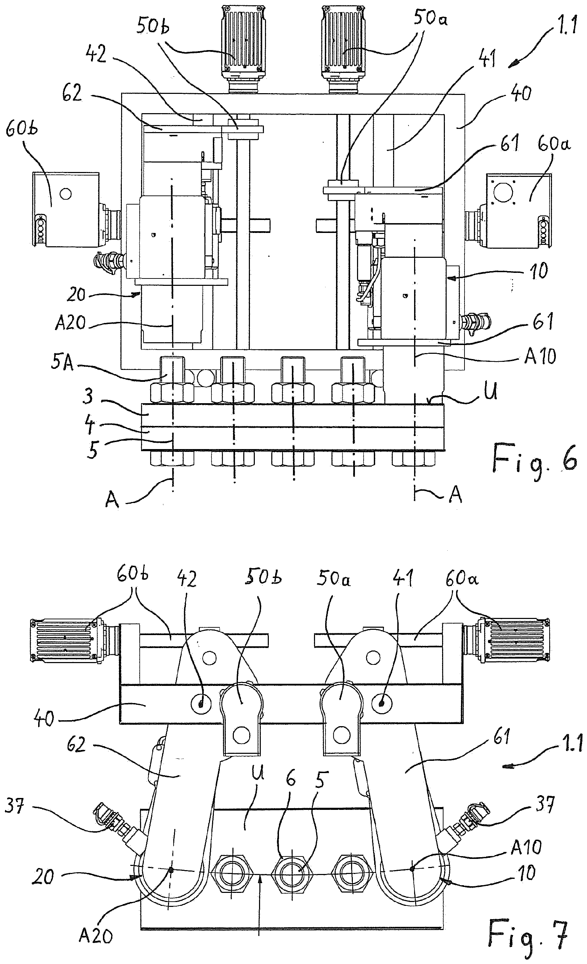

Hierzu weisen gemäß Fig. 7 die Stellantriebe 60a, 60b Schraubspindeln auf, die an den Armen 61, 62 angreifen.

Die Stellantriebe 60a, 60b und ebenso die Längsantriebe 50a, 50b werden jeweils durch Elektromotoren in Abhängigkeit von den Prozesssteuersignalen bewegt. Prinzipiell ist es auch möglich, die Antriebe hydraulisch oder pneumatisch auszugestalten.

Ferner ist es möglich, anstelle zweier Stellantriebe 60a, 60b nur einen Stellantrieb vorzusehen. Dieser kann, z. B. mittels eines geeigneten Getriebes, zugleich beide Arme 61, 62 antreiben und diese relativ zueinander um die Achsen 41, 42 schwenken.

Mit der hier beschriebenen Vorrichtung ist ein sukzessives Umsetzen von einer Schraubverbindung auf eine andere Schraubverbindung durchführbar, ohne dass, wie im Stand der Technik, ein linear oder entlang einer vorgegebenen Kreisbahn rollender Fahrantrieb notwendig ist. Bei dem hier beschriebenen Verfahren ist zu jedem Zeitpunkt eine starre Verbindung zu mindestens einer Schraubverbindung sichergestellt. Diese Verbindung wird erst gelöst, nachdem zu einer anderen Schraubverbindung eine starre Verbindung aufgebaut ist.

Insgesamt ist daher das Verfahren durch ein wiederholtes Umsetzen in eine neue Verschraubungsposition gekennzeichnet und ist daher ein "schreitendes" Verfahren, ohne dass die Bewegung von einer in eine andere Position eine fahrende bzw. eine von Verschraubung zu Verschraubung rollende Bewegung wäre.

Zu jedem Zeitpunkt des Verschraubungsprozesses ist zumindest ein Schraubwerkzeug 10, 20 mit seinem jeweiligen Gewindebolzen 5 verschraubt, und stützt sich dabei zugleich auf der Unterlage U ab. In diesem Schraubwerkzeug sind die Mittel zum Längsdehnen des jeweiligen Gewindebolzens aktiviert, d. h. die Wechselbuchse übt Zug aus. Dadurch besteht zumindest an dieser einen Position eine sichere, starre Verbindung, d. h. eine Fixposition ist sichergestellt. Zugleich kann mittels des Stellantriebs oder der Stellantriebe 60a, 60b das andere, also das hydraulisch nicht aktivierte Schraubwerkzeug bis in eine neue Position über einem weiteren, noch nicht nachgezogenen Gewindebolzen 5 bewegt werden. Das Umsetzen in eine neue Position kann mit hoher Präzision erfolgen, da während des Umsetzens zumindest ein Schraubwerkzeug 10, 20 seinen starren Eingriff am Gewindebolzen 5 und zugleich abgestützt auf der Unterlage U beibehält.

Das Verfahren des Bewegens bzw. Umsetzens in eine neue Verschraubungsposition wird nachfolgend anhand eines praktischen Beispiels und in einzelnen Schritten beschrieben. Ausgangspunkt ist eine Situation, in der beide Schraubwerkzeuge 10, 20 hydraulisch aktiviert, also jeweils mit einem Gewindebolzen 5 der Schraubverbindungen verschraubt sind, wobei sich die Zylindergehäuse 30 beider Schraubwerkzeuge 10, 20 aufgrund der Hydraulikkräfte auf der Unterlage U abstützen. Ausgehend von dieser Situation werden folgende Verfahrensschritte durchgeführt:
a) hydraulische Deaktivierung des ersten Schraubwerkzeugs 10 und durch Betätigung des Drehantriebs 45 Abschrauben der Wechselbuchse des ersten Schraubwerkzeugs 10 von dem jeweiligen Gewindebolzen 5, sodann durch Betätigung des ersten Längsantriebs 50a Anheben und Lösen des ersten Schraubwerkzeugs 10 von der Schraubverbindung;
b) durch Betätigung des Stellantriebs 60a oder alternativ beider Stellantriebe 60a, 60b Bewegen ausschließlich des ersten Schraubwerkzeugs 10 rechtwinklig und damit quer zu seiner eigenen Werkzeugachse A10 bis in eine neue Position, in der die Werkzeugachse A10 zu der Schraubenachse A eines weiteren Gewindebolzens 5 fluchtet. Während dieses Schritts verändert sich der Abstand der Werkzeugachse A10 zu der Werkzeugachse A20 des positionsfesten Schraubwerkzeugs 20;
c) in der so eingenommenen neuen Position Absenken des ersten Schraubwerkzeugs 10 mittels des Längsantriebs 50a, sodann Aufschrauben der Wechselbuchse 21 auf den weiteren Gewindebolzen 5 mittels des Drehantriebs 45;
d) durch Einspeisen von Hydraulikdruck in das erste Schraubwerkzeug 10 Längsdehnen des weiteren Gewindebolzens 5 durch Zugausübung der Wechselbuchse 21 und, unter Aufrechterhalten des Längsdehnens, Nachziehen der betreffenden Mutter 6 mittels der Drehhülse 33 und angetrieben durch den Drehantrieb der Drehhülse 33;
e) sodann Wiederholen der Schritte a) bis d), jedoch diesmal durch Umsetzen des anderen, bisher positionsfesten Schraubwerkzeugs 20 und bei unveränderter Position des ersten Schraubwerkzeugs 10.

Der entscheidende Vorteil dieses durch "schreitendes" Umsetzen arbeitenden Verfahrens ist, dass jederzeit eine starre Verbindung des Werkzeugmoduls 1.1 an einem vorläufigen Fixpunkt sichergestellt ist. Diese starre Verbindung wird dann und erst dann aufgegeben bzw. gelöst, wenn eine ebenso starre Verbindung neu aufgebaut ist. Da sich das Werkzeugmodul 1.1 zu jedem Zeitpunkt an mindestens einer Schraubverbindung festklammert und zugleich auf der Unterlage U abstützt, eignet sich das Verfahren nicht nur für vertikale Mehrfachverschraubungen. Vielmehr ist das Verfahren auch für gegenüber der Vertikalen angewinkelte und sogar für Mehrfachverschraubungen mit horizontalen Schraubenachsen geeignet. Selbst Mehrfachverschraubungen über Kopf sind mit dem Werkzeugmodul 1.1 sicher und vollautomatisch durchführbar.

Die Roboter- bzw. Prozesssteuerung steuert und kontrolliert sämtliche Vorgänge beim Umsetzen des jeweiligen Schraubwerkzeugs 10, 20 in die neue Position, wobei die Steuerung dazu ausgebildet ist, sowohl die Drehantriebe 45, als auch die Längsantriebe 50a, 50b und Stellantriebe 60a, 60b zu kontrollieren und ihre Funktion zu steuern. Dieselbe Prozesssteuerung steuert und kontrolliert ferner die Hydraulik für das Längsdehnen des Gewindebolzens 5 und das Formschlusswerkzeug zum Nachziehen der Mutter 6.

Das Umsetzen der Schraubwerkzeuge 10, 20 erfolgt, wie beschrieben, nacheinander. Hingegen muss das Längsdehnen der Gewindebolzen 5 nicht nacheinander erfolgen, sondern kann an beiden Gewindebolzen gleichzeitig erfolgen.

Bei einer Ausgestaltung der Mehrfachschraubvorrichtung mit insgesamt drei Schraubwerkzeugen können z. B. zwei dieser Werkzeuge die jeweiligen Gewindebolzen 5 längsdehnen, während zur selben Zeit das dritte Schraubwerkzeug neu positioniert, d. h. auf eine weitere Verschraubung umgesetzt wird.

Zum sicheren Auffinden der jeweils nächsten Verschraubungsposition und zum Bewegen des jeweiligen Schraubwerkzeugs 10, 20 bis in diese nächste Verschraubungsposition sind an dem Träger 40 Sensoren 70 befestigt. Die Sensoren 70 sind signaltechnisch mit der Prozesssteuerung, also der Robotersteuerung, verbunden. Als Sensor geeignet sind insbesondere bilderfassende Kameras, Laser- oder Induktivsensoren. Mittels der Sensoren 70 ist die jeweils nächste Verschraubungsposition vorzugsweise dann detektierbar, wenn die genaue Lage der einzelnen Verschraubungspositionen und insbesondere die Lage der einzelnen Schraubenachsen A nicht bekannt und nicht vorab als Positionsdatensatz fest abgespeichert ist.

Die Sensorik der Sensoren 70 kann zum Erkennen des jeweils als nächstes zu dehnenden Gewindebolzens 5 oder dessen Schraubenachse A ausgebildet sein, oder zum Erkennen des benachbarten oder zweier benachbarter Gewindebolzen.

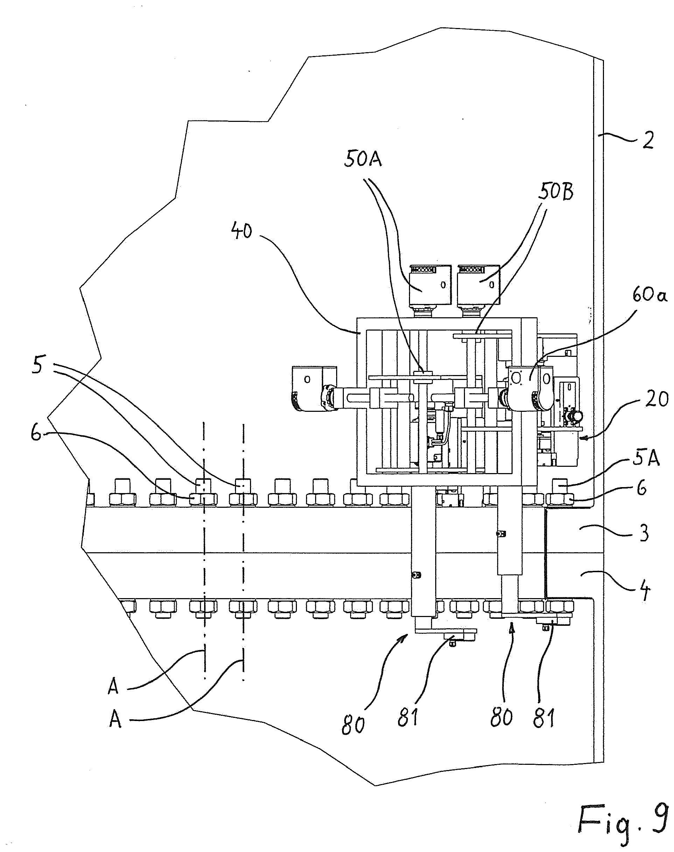

Fig. 9 zeigt Maßnahmen, ein ungewolltes Mitdrehen des Gewindebolzens 5 während des Aufschraubens der Wechselbuchse 21 zu verhindern. Bestandteil der Verdrehsicherung ist ein zwischen einer Ruheposition und einer Gegenhalteposition vor- und zurückbewegbares, vorzugsweise elektrisch oder alternativ durch einfache Federkraft angetriebenes Haltewerkzeug 80. Jedes Schraubwerkzeug 10, 20 ist mit einem eigenen, ihm zugordneten Haltewerkzeug 80 versehen.

Für die Zeitdauer zumindest des Aufschraubens der Wechselbuchse 21 wird eine Gegenhaltefläche 81, mit der das Haltewerkzeug 80 versehen ist, bis in eine drehfeste Anlage an dem Gewindebolzen 5 oder mit dem Gewindebolzen 5 gebracht. Diese Anlage kann formschlüssig oder reibschlüssig sein. Es versteht sich, dass der Ort der Anlage nicht der mit der Wechselbuchse 21 verschraubte Längsabschnitt L des Gewindes 5A sein kann.

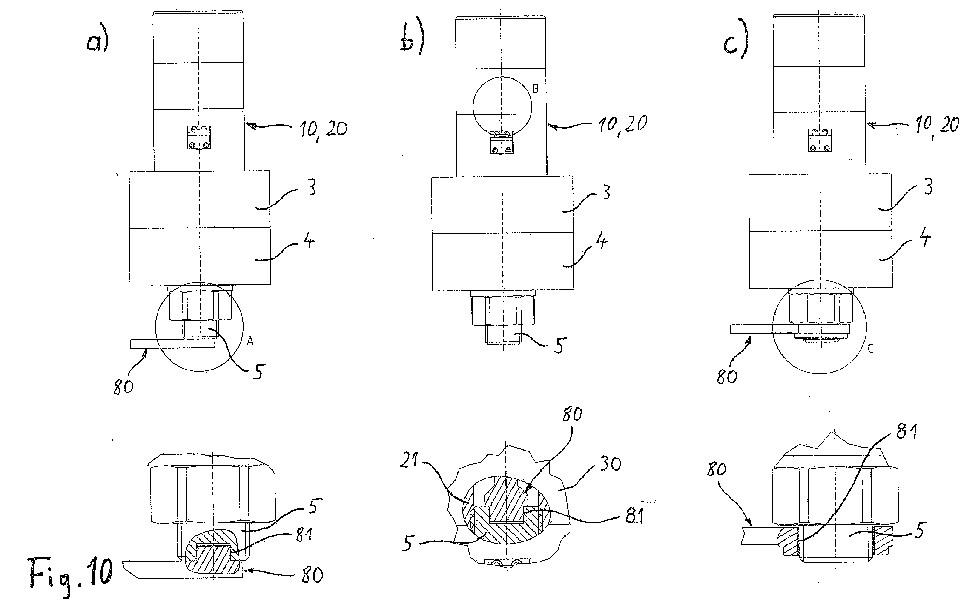

Die Figuren 10a), 10b) und 10c) zeigen, dass zu dem Ort am Gewindebolzen 5, an dem die Gegenhaltefläche 81 zur Anlage kommt, unterschiedliche Möglichkeiten bestehen.

Ist gemäß den Figuren 10a) und 10b) der Gewindebolzen 5 an einem seiner beiden Enden mit einem Innenmehrkant oder einem Außenmehrkant versehen, wird die Gegenhaltefläche 81 des Haltewerkzeugs 80 durch eine axiale Bewegung an diesem Mehrkant zur Anlage gebracht, wodurch ein Formschluss und damit die Verdrehsicherung erreicht wird.

Bei Figur 10b) ist diese Verdrehsicherung platzsparend innerhalb der Wechselbuchse 21 des Schraubwerkzeugs 10, 20 realisiert, wobei das Haltewerkzeug 80 unter dem Druck eines nicht dargestellten Federmechanismus selbsttätig in den schraubenseitigen Mehrkant einrasten kann.

Alternativ kann gemäß Figur 10c) die Gegenhaltefläche 81 des Haltewerkzeugs 80 direkt an dem Gewinde des Gewindebolzens 5 zur Anlage gebracht werden, z. B. durch einen starken Reibschluss mit dem Gewinde. Dieser radiale Kontakt zum Gewinde kann entweder auf den Gewindespitzen erfolgen, oder an den Gewindeflanken.

Während in dem Werkzeugmodul 1.1 die Schraubwerkzeuge 10, 20 einschließlich deren Einrichtungen zum Längsdehnen des Gewindebolzens 5, zum Nachziehen der Mutter 6, sowie ferner die Drehantriebe 45, die Längsantriebe 50a, 50b und die Stellantriebe 60a, 60b zusammengefasst sind, befinden sich in dem Versorgungsmodul 1.2 die Baugruppen für die Energieversorgung. Hierzu zählt die Hydraulikversorgung mit der Hydraulikpumpe und deren Steuerung für den Betrieb der Schraubwerkzeuge 10, 20, und ferner die Stromversorgung und deren Steuerung für den Betrieb der Drehantriebe 45, der Längsantriebe 50a, 50b, der Stellantriebe 60a, 60b und der Drehhülse 33 zum Nachziehen der jeweiligen Mutter 6.

Gemäß den Figuren 1 bis 3 führt eine vorzugsweise biegsam ausgebildete Versorgungsleitung 85 für Hydraulikdruck von dem Versorgungsmodul 1.2 zu den Hydraulikanschlüssen 37 der beiden Schraubwerkzeuge. Ferner führt eine elektrische Versorgungsleitung 86 von dem Versorgungsmodul 1.2 zu dem Werkzeugmodul 1.1.

Die Versorgungsleitungen 85, 86 können einen gemeinsamen Leitungsstrang bilden. Ferner kann eine kabelgebundene oder drahtlose Signalverbindung zwischen den Modulen 1.1, 1.2 für die Steuer- und Kontrollsignale der Robotersteuerung bestehen.

Bei der Variante nach den Figuren 1 und 2 wird das Versorgungsmodul 1.2 von dem Werkzeugmodul 1.1 nach Art eines Anhängers gezogen oder alternativ geschoben. Hierzu ist das Versorgungsmodul 1.2 mittels drehbar daran gelagerter Rollen 90 oder Radelemente auf der Unterlage U und parallel zu der Unterlage U fahrbar. Zur Übertragung der Zug- oder Schubkräfte ist der Träger 40 über ein biegsam oder gelenkig ausgebildetes Druck- oder Zuggestänge 91 mechanisch mit dem Versorgungsmodul 1.1 verbunden.

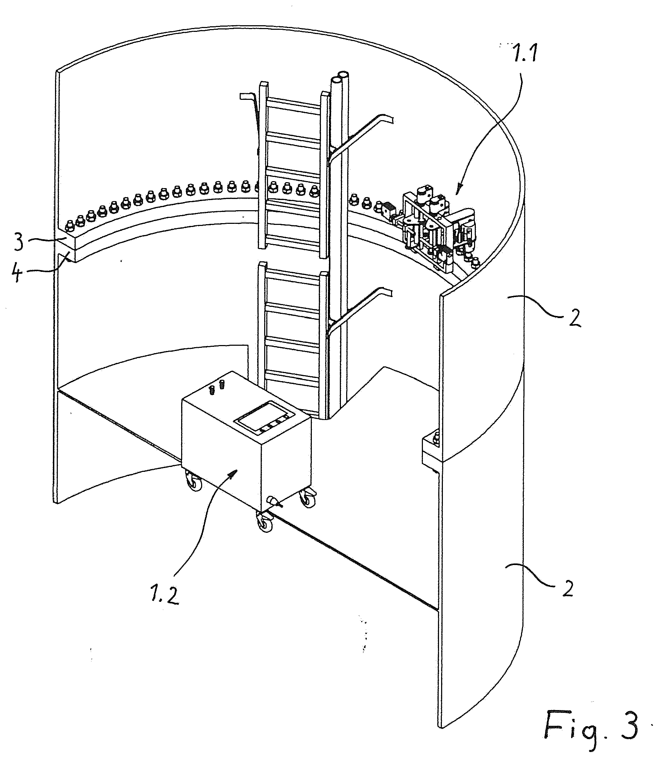

Hingegen ist bei der Variante nach Figur 3 das Versorgungsmodul 1.2 ortsfest an einer zentral gelegenen Position angeordnet, wobei sich das Werkzeugmodul 1.1 um das Versorgungsmodul 1.2 herum von Verschraubung zu Verschraubung bewegt. Auch bei dieser Ausgestaltung führen die hier nicht dargestellten Versorgungsleitungen, vorzugsweise wiederum in flexibler, biegsamer Ausgestaltung, von dem Versorgungsmodul 1.2 zu dem Werkzeugmodul 1.1.

### Bezugszeichenliste

- 1: Vorrichtung, Mehrfachschraubvorrichtung
- 1.1: Werkzeugmodul
- 1.2: Versorgungsmodul
- 2: Turmabschnitt
- 3: Flansch
- 4: Flansch
- 5: Gewindebolzen
- 5A: Gewinde
- 6: Mutter
- 7: weitere Mutter

- 10: Schraubwerkzeug, Schraubenspannzylinder
- 20: Schraubwerkzeug, Schraubenspannzylinder
- 21: Wechselbuchse
- 23: Zuggewinde

- 30: Zylindergehäuse
- 33: Drehhülse
- 34: Getriebe
- 37: Hydraulikanschluss

- 40: Träger
- 41: Achse
- 42: Achse
- 45: Drehantrieb
- 50a: Längsantrieb
- 50b: Längsantrieb

- 60a: Stellantrieb
- 60b: Stellantrieb
- 61: Arm
- 62: Arm
- 70: Sensor
- 80: Haltewerkzeug
- 81: Gegenhaltefläche
- 85: Versorgungsleitung
- 86: Versorgungsleitung

- 90: Rollen
- 91: Druck- oder Zuggestänge

- A: Schraubenachse
- A10: Werkzeugachse
- A20: Werkzeugachse

- L: Längsabschnitt
- U: Unterlage

## Patentansprüche

1. Verfahren zum Anziehen von Schraubverbindungen, deren Schraubenachsen (A) in zueinander festgelegten Positionen angeordnet sind und die sich jeweils aus einem Gewindebolzen (5) und einer auf dessen Gewinde (5A) aufgeschraubten und gegenüber einer Unterlage (U) abgestützten Mutter (6) zusammensetzen, unter Einsatz einer Mehrfachschraubvorrichtung (1) mit einem ersten Schraubwerkzeug (10) und mindestens einem weiteren, zweiten Schraubwerkzeug (20), wobei die Schraubwerkzeuge (10, 20) jeweils aufweisen
- eine in dem Schraubwerkzeug (10, 20) um eine Werkzeugachse (A10, A20) drehbar angeordnete Wechselbuchse (21), an der ein mit einem Längsabschnitt (L) des Gewindes (5A) verschraubbares Zuggewinde (23) ausgebildet ist,
- einen Drehantrieb (45) zum Auf- und Abschrauben der Wechselbuchse (21) auf das Gewinde (5A) bzw. von dem Gewinde (5A),
- Mittel zum Längsdehnen des Gewindebolzens (5) durch Zugausübung der Wechselbuchse (21) längs der Werkzeugachse (A10, A20),
- ein mit der Mutter (6) koppelbares Formschlusswerkzeug zum Nachziehen der Mutter (6),
**dadurch gekennzeichnet ,dass** die Schraubwerkzeuge (10, 20) jeweils mittels eines Längsantriebs (50a, 50b) in Längsrichtung ihrer Werkzeugachsen (A10, A 20) beweglich sind und die Schraubwerkzeuge (10, 20) mittels mindestens eines Stellantriebs (60a, 60b) relativ zueinander in einer Richtung beweglich sind, die rechtwinklig zu mindestens einer der Werkzeugachsen (A10, A20) ist,
wobei zu einem Zeitpunkt gleichzeitig beide Schraubwerkzeuge (10, 20) gegenüber der Unterlage (U) abgestützt sind und die Wechselbuchse (21) des ersten Schraubwerkzeugs (10) sowie die Wechselbuchse (21) des zweiten Schraubwerkzeugs (20) jeweils auf das Gewinde (5A) eines Gewindebolzens (5) aufgeschraubt sind,
und wobei sich, bei unveränderter Position des zweiten Schraubwerkzeugs (20), folgende Schritte anschließen:
a) mittels des Drehantriebs (45) Abschrauben der Wechselbuchse (21) des ersten Schraubwerkzeugs (10) von dem Gewindebolzen (5) und mittels des Längsantriebs (50a) Anheben des ersten Schraubwerkzeugs (10);
b) mittels des Stellantriebs (60a, 60b) Bewegen des ersten Schraubwerkzeugs (10) relativ zu dem zweiten Schraubwerkzeug (20) bis in eine neue Position, in der die Werkzeugachse (A10) des ersten Schraubwerkzeugs (10) zu der Schraubenachse (A) eines weiteren Gewindebolzens (5) fluchtet;
c) in der neuen Position mittels des Längsantriebs (50a) Absenken des ersten Schraubwerkzeugs (10) und, mittels des Drehantriebs (45), Aufschrauben der Wechselbuchse (21) auf den weiteren Gewindebolzen (5);
d) Längsdehnen des weiteren Gewindebolzens (5) durch Zugausübung der Wechselbuchse (21) und, unter Aufrechterhalten des Längsdehnens, Nachziehen der Mutter (6);
e) Wiederholen der Schritte a) bis d), diesmal für das zweite Schraubwerkzeug (20) und bei unveränderter Position des ersten Schraubwerkzeugs (10).

2. Verfahren nach Anspruch 1, **gekennzeichnet durch** eine Steuerung zum Bewegen des jeweiligen Schraubwerkzeugs (10, 20) bis in die neue Position, wobei die Steuerung sensorgesteuert mittels eines zur Positionsortung der Gewindebolzen (5) ausgebildeten Sensors (70) erfolgt.

3. Verfahren nach Anspruch 1 oder 2, **gekennzeichnet durch** elektrische, hydraulische oder pneumatische Betätigung des Stellantriebs (60a, 60b).

4. Verfahren nach einem der vorangehenden Ansprüche, **dadurch gekennzeichnet, dass** mittels des Stellantriebs (60a, 60b) der Abstand der Werkzeugachsen (A10, A20) zueinander verändert wird.

5. Verfahren nach Anspruch 4, **dadurch gekennzeichnet, dass** das Verändern des Abstands der Werkzeugachsen (A10, A20) in einer linearen Bewegung durchgeführt wird.

6. Verfahren nach Anspruch 4, **dadurch gekennzeichnet, dass** das Verändern des Abstands der Werkzeugachsen (A10, A20) in einer bogenförmigen Bewegung oder in einer Kombination zweier bogenförmiger Bewegungen durchgeführt wird.

7. Verfahren nach Anspruch 6, **dadurch gekennzeichnet, dass** die Schraubwerkzeuge (10, 20) an einem Träger (40) angeordnet sind, und dass die bogenförmigen Bewegungen durch ein Schwenken der Schraubwerkzeuge (10, 20) gegenüber dem Träger (40) erfolgen.

8. Verfahren nach einem der vorangehenden Ansprüche, **gekennzeichnet durch** elektrische, hydraulische oder pneumatische Betätigung der Längsantriebe (50a, 50b).

9. Verfahren nach einem der vorangehenden Ansprüche, **dadurch gekennzeichnet, dass** das Auf- und Abschrauben der Wechselbuchse (21) mittels eines nur dem jeweiligen Schraubwerkzeug (10, 20) zugeordneten Drehantriebs (45) durchgeführt wird.

10. Verfahren nach einem der vorangehenden Ansprüche, **gekennzeichnet durch** eine Verdrehsicherung mit einem zwischen einer Ruheposition und einer Gegenhalteposition vor- und zurückbeweglichen Haltewerkzeug (80), wobei für die Zeitdauer des Aufschraubens der Wechselbuchse (21) eine an dem Haltewerkzeug (80) ausgebildete Gegenhaltefläche (81) zu einer drehsichernden Anlage an dem Gewindebolzen (5) gebracht wird, wobei der Ort der Anlage ein anderer als der mit der Wechselbuchse (21) verschraubte Längsabschnitt (L) des Gewindes (5A) ist.

11. Verfahren nach Anspruch 10, **gekennzeichnet durch** eine Robotersteuerung zum Bewegen des jeweiligen Schraubwerkzeugs (10, 20) bis in die neue Position, wobei die Robotersteuerung auch das Vor- und Zurückbewegen des Haltewerkzeugs (80) steuert.

12. Mehrfachschraubvorrichtung für Schraubverbindungen, deren Schraubenachsen (A) in zueinander festgelegten Positionen angeordnet sind und die sich jeweils aus einem Gewindebolzen (5) und einer auf dessen Gewinde (5A) aufgeschraubten und gegenüber einer Unterlage (U) abgestützten Mutter (6) zusammensetzen, mit einem ersten Schraubwerkzeug (10) und mindestens einem weiteren, zweiten Schraubwerkzeug (20), wobei die Schraubwerkzeuge (10, 20) jeweils aufweisen
- eine in dem Schraubwerkzeug (10, 20) um eine Werkzeugachse (A10, A20) drehbar angeordnete Wechselbuchse (21), an der ein mit einem Längsabschnitt (L) des Gewindes (5A) verschraubbares Zuggewinde (23) ausgebildet ist,
- einen Drehantrieb (45) zum Auf- und Abschrauben der Wechselbuchse (21) auf das Gewinde (5A) bzw. von dem Gewinde (5A),
- Mittel zum Längsdehnen des Gewindebolzens (5) durch Zugausübung der Wechselbuchse (21) längs der Werkzeugachse (A10, A20),
- ein mit der Mutter (6) koppelbares Formschlusswerkzeug zum Nachziehen der Mutter (6),
**dadurch gekennzeichnet, dass** die Schraubwerkzeuge (10, 20) jeweils mittels eines Längsantriebs (50a, 50b) in Längsrichtung ihrer Werkzeugachsen (A10, A20) beweglich ausgebildet sind, und dass die Schraubwerkzeuge (10, 20) mittels mindestens eines Stellantriebs (60a, 60b) relativ zueinander in einer Richtung beweglich sind, die rechtwinklig zu mindestens einer der Werkzeugachsen (A10, A20) ist.

13. Mehrfachschraubvorrichtung nach Anspruch 12, **dadurch gekennzeichnet, dass** jedem Schraubwerkzeug (10, 20) ein eigener Stellantrieb (60a, 60b) zugeordnet ist.

14. Mehrfachschraubvorrichtung nach Anspruch 12 oder 13, **dadurch gekennzeichnet, dass** der Stellantrieb (60a, 60b) elektrisch, hydraulisch oder pneumatisch betätigt ist.

15. Mehrfachschraubvorrichtung nach einem der Ansprüche 12 - 14, **dadurch gekennzeichnet, dass** die Schraubwerkzeuge (10, 20) an einem Träger (40) angeordnet sind, und dass zumindest eines der Schraubwerkzeuge (10, 20) mittels des Stellantriebs (60a, 60b) gegenüber dem Träger (40) beweglich ist.

16. Mehrfachschraubvorrichtung nach Anspruch 15, **dadurch gekennzeichnet, dass** mindestens eines der Schraubwerkzeuge (10, 20) am freien Ende eines Arms (61, 62) befestigt ist, der um eine an dem Träger (40) angeordnete Achse (41, 42) schwenkbar ist.

17. Mehrfachschraubvorrichtung nach Anspruch 16, **dadurch gekennzeichnet, dass** die Schraubwerkzeuge (10, 20) jeweils am freien Ende eines Arms (61, 62) befestigt sind, der um eine an dem Träger (40) angeordnete Achse (41, 42) schwenkbar ist.

18. Mehrfachschraubvorrichtung nach Anspruch 16 oder 17, **dadurch gekennzeichnet, dass** die Längsantriebe (50a, 50b) voneinander unabhängig ausgebildet sind, den jeweiligen Arm (61, 62) parallel zur Längsrichtung der Achse (41, 42) zu bewegen.

19. Mehrfachschraubvorrichtung nach einem der Ansprüche 12 - 18, **dadurch gekennzeichnet, dass** sich dieser aus einem Werkzeugmodul (1.1), in dem die Schraubwerkzeuge (10, 20) einschließlich der Mittel zum Längsdehnen des Gewindebolzens (5), die Drehantriebe (45), die Längsantriebe (50a, 50b) und die Stellantriebe (60a, 60b) zusammengefasst sind, und aus einem räumlich getrennten Versorgungsmodul (1.2) zusammensetzt, in dem zumindest die Energieversorgung zum Betreiben der Mittel zum Längsdehnen des Gewindebolzens (5) zusammengefasst ist, und dass als Bestandteil der Energieversorgung eine Versorgungsleitung (85), vorzugsweise eine biegsam ausgebildete Versorgungsleitung, von dem Versorgungmodul (1.2) zu dem Werkzeugmodul (1.1) führt.

20. Mehrfachschraubvorrichtung nach Anspruch 19, **dadurch gekennzeichnet, dass** Bestandteil des Versorgungsmoduls (1.2) außerdem eine Energieversorgung für die Drehantriebe (45), Längsantriebe (50a, 50b) und Stellantriebe (60a, 60b) ist, und dass als Bestandteil dieser Energieversorgung eine zweite, vorzugsweise biegsam ausgebildete Versorgungsleitung (86) von dem Versorgungmodul (1.2) zu dem Werkzeugmodul (1.1) führt.

21. Mehrfachschraubvorrichtung nach Anspruch 19 oder 20, **dadurch gekennzeichnet, dass** das Versorgungsmodul (1.2), vorzugsweise über drehbar an dem Versorgungsmodul gelagerte Rollen oder Radelemente (90), parallel zu der Unterlage (U) fahrbar ausgebildet ist, und dass das Versorgungsmodul (1.2) über ein biegsam oder gelenkig ausgebildetes Druck- oder Zuggestänge (91) mechanisch mit dem Werkzeugmodul (1.1) verbunden ist.

22. Mehrfachschraubvorrichtung nach einem der Ansprüche 12 - 21, **gekennzeichnet durch** eine Verdrehsicherung bestehend aus einem Haltewerkzeug (80), an dem eine gegen den Gewindebolzen (5) an einem Ort, der ein anderer als der mit der Wechselbuchse (21) verschraubte Längsabschnitt (L) des Gewindes (5A) ist, anlegbare Gegenhaltefläche (81) ausgebildet ist, sowie einem Antrieb für ein Vor- und Zurückbewegen des Haltewerkzeugs (80) zwischen einer Ruheposition und einer Gegenhalteposition, in welcher die Gegenhaltefläche (81) zur drehsicheren Anlage an dem Gewindebolzen (5) gelangt.

23. Mehrfachschraubvorrichtung nach Anspruch 22, **dadurch gekennzeichnet, dass** jedes Schraubwerkzeug (10, 20) mit einem eigenen Haltewerkzeug (80) und einem eigenen Antrieb des Haltewerkzeugs (80) versehen ist.

24. Mehrfachschraubvorrichtung nach Anspruch 23, **dadurch gekennzeichnet, dass** die Antriebe der Haltewerkzeuge (80) mit der Bewegung der Schraubwerkzeuge (10, 20) längs zu deren Werkzeugachsen (A10, A20) gekoppelt sind.

## Claims

1. Method for tightening screwed connections, the screw axes (A) of which are arranged in mutually fixed positions and which are each composed of a threaded bolt (5) and of a nut (6) screwed onto its thread (5A) and supported against a base (U), by use of a multi-screwing device (1) having a first screwing tool (10) and at least one further, second screwing tool (20), the screwing tools (10, 20) each having
- an exchangeable bushing (21), which is arranged in the screwing tool (10, 20) so as to be rotatable about a tool axis (A10, A20), and on which there is realized a tension thread (23) that can be screwed to a longitudinal portion (L) of the thread (5A),
- a rotary drive (45) for screwing the exchangeable bushing (21) onto and off the thread (5A),
- means for longitudinally straining the threaded bolt (5) by exertion of tensile force by the exchangeable bushing (21) along the tool axis (A10, A20),
- a form-fitting tool that can be coupled to the nut (6) for the purpose of retightening the nut (6),
**characterized in that** the screwing tools (10, 20) are each movable in the longitudinal direction of their tool axes (A10, A20) by means of a longitudinal drive (50a, 50b) and, by means of at least one actuating drive (60a, 60b), the screwing tools (10, 20) are movable relative to each other in a direction that is at right angles relative to at least one of the tool axes (A10, A20),
at one point in time both screwing tools (10, 20) being simultaneously supported against the base (U), and the exchangeable bushing (21) of the first screwing tool (10) and the exchangeable bushing (21) of the second screwing tool (20) each being screwed onto the thread (5A) of a threaded bolt (5),
and, with the position of the second screwing tool (20) being unchanged, the following steps ensuing:
a) by means of the rotary drive (45), unscrewing the exchangeable bushing (21) of the first screwing tool (10) from the threaded bolt and, by means of the longitudinal drive (50a), raising the screwing tool (10);
b) by means of the actuating drive( 60a, 60b), moving the first screwing tool (10) relative to the second screwing tool (20) into a new position in which the tool axis (A10) of the first screwing tool (10) is in alignment with the screw axis (A) of a further threaded bolt (5);
c) in the new position, lowering the first screwing tool (10) by means of the longitudinal drive (50a) and, by means of the rotary drive (45), screwing the exchangeable bushing (21) onto the further threaded bolt (5);
d) longitudinally straining the further threaded bolt (5) by exertion of tensile force by the exchangeable bushing (21) and, while maintaining the longitudinal straining, retightening the nut (6);
e) repeat the steps a) to d), this time for the second screwing tool (20) and with the position of the first screwing tool (10) unchanged.

2. Method according to Claim 1, **characterized by** a control system for moving the respective screwing tool (10, 20) into the new position, the control system being sensor-controlled by means of a sensor (70) designed to locate the position of the threaded bolt (5).

3. Method according to Claim 1 or 2, **characterized by** electrical, hydraulic or pneumatic actuation of the actuating drive (60a, 60b).

4. Method according to any one of the preceding claims, **characterized in that** the distance between the tool axes (A10, A20) is altered by means of the actuating drive (60a, 60b).

5. Method according to Claim 4, **characterized in that** the alteration of the distance of the tool axes (A10, A20) is effected in a linear movement.

6. Method according to Claim 4, **characterized in that** the alteration of the distance of the tool axes (A10, A20) is effected in an arcuate movement or in a combination of two arcuate movements.

7. Method according to Claim 6, **characterized in that** the screwing tools (10, 20) are arranged on a carrier (40), and that the arcuate movements are effected by swivelling the screwing tools (10, 20) relative to the carrier (40).

8. Method according to any one of the preceding claims, **characterized by** electrical, hydraulic or pneumatic actuation of the longitudinal drives (50a, 50b).

9. Method according to any one of the preceding claims, **characterized in that** the exchangeable bushing (21) screwed on and off by means of a rotary drive (45) that is assigned only to the respective screwing tool (10, 20).

10. Method according to any one of the preceding claims, **characterized by** an anti-rotation means having a holding tool (80) that is designed to be movable back and forth between a neutral position and a counter-holding position, for the duration of the screwing-on of the exchangeable bushing (21), a counter-holding surface (81) realized on the holding tool (80) being is brought into a rotation-locking bearing contact with the threaded bolt (5), the location of the bearing contact different from the longitudinal portion (L) of the thread (5A) that is screwed to the exchangeable bushing (21).

11. Method according to Claim 10, **characterized by** a robot control system for moving the respective screwing tool (10, 20) into the new position, the robot control system also controlling the back and forth movement of the holding tool (80).

12. Multi-screwing device for screwed connections, the screw axes (A) of which are arranged in mutually fixed positions and which are each composed of a threaded bolt (5) and a nut (6) screwed onto its thread (5A) and supported against a base (U), having a first screwing tool (10) and at least one further, second screwing tool (20), the screwing tools (10, 20) each having
- an exchangeable bushing (21), which is arranged in the screwing tool (10, 20) so as to be rotatable about a tool axis (A10, A20), and on which there is realized a tension thread (23) that can be screwed to a longitudinal portion (L) of the thread (5A),
- a rotary drive (45) for screwing the exchangeable bushing (21) onto and off the thread (5A),
- means for longitudinally straining the threaded bolt (5) by exertion of tensile force by the exchangeable bushing (21) along the tool axis (A10, A20),
- a form-fitting tool that can be coupled to the nut (6) for the purpose of retightening the nut (6),
**characterized in that** the screwing tools (10, 20) are each designed to be movable in the longitudinal direction of their tool axes (A10, A20) by means of a longitudinal drive (50a, 50b), and that the screwing tools (10, 20) are movable relative to each other, in a direction at right angles relative to at least one of the tool axes (A10, A20), by means of at least one actuating drive (60a, 60b).

13. Multi-screwing device according to Claim 12, **characterized in that each** screwing tool (10, 20) is assigned its own positioning drive (60a, 60b).

14. Multi-screwing device according to Claim 12 or 13, **characterized in that** the actuator (60a, 60b) is electrically, hydraulically or pneumatically actuated.

15. Multi-screwing device according to any one of Claims 12 - 14, **characterized in that** die screwing tools (10, 20) are arranged on a carrier (40), and that at least one of the screwing tools (10, 20) is movable relative to the carrier (40) by means of the actuating drive (60a, 60b).

16. Multi-screwing device according to Claim 15, **characterized in that** at least one of the screwing tools (10, 20) is attached to the free end of an arm (61, 62) that can be swivelled about an axis (41, 42) arranged on the carrier (40).

17. Multi-screwing device according to Claim 16, **characterized in that** the screwing tools (10, 20) are each attached to the free end of an arm (61, 62) can be swivelled about an axis (41, 42) arranged on the carrier (40).

18. Multi-screwing device according to Claim 16 or 17, **characterized in that** the longitudinal drives (50a, 50b) are designed, independently of each other, to move the respective arm (61, 62) parallel to the longitudinal direction of the axis (41, 42).

19. Multi-screwing device according to any one of Claims 12 - 18, **characterized in that** it is composed of a tool module (1.1), in which there are grouped together the screwing tools (10, 20), including the means for longitudinally straining the threaded bolt (5), the rotary drives (45), the longitudinal drives (50a, 50b) and the actuating drives (60a, 60b), and of a spatially separate supply module (1.2) in which there is grouped at least the power supply for operating the means for longitudinally straining the threaded bolt (5), and **in that** a supply line (85), preferably a flexible supply line, leads, as a constituent part of the power supply, from the supply module (1.2) to the tool module (1.1) as part of the power supply.

20. Multi-screwing device according to Claim 19, **characterized in that** also a constituent part of the supply module (1.2) is a power supply for the rotary drives (45), longitudinal drives (50a, 50b) and actuating drives (60a, 60b), and that a second, preferably flexible, supply line (86) leads, as a constituent part of this power supply, from the supply module (1.2) to the tool module (1.1).

21. Multi-screwing device according to Claim 19 or 20, **characterized in that** the supply module (1.2) is designed to be movable parallel to the base (U), preferably via rollers or wheel elements (90) that are rotatably mounted on the supply module, and that the supply module (1.2) is mechanically connected to the tool module (1.1) via a flexible or articulated push or pull linkage (91).

22. Multi-screwing device according to any one of Claims 12 - 21, **characterized by** an anti-rotation means composed of a holding tool (80), realized on which there is a counter-holding surface (81) that can be placed against the threaded bolt (5) at a location other than the longitudinal portion (L) of the thread (5A) that is screwed to the exchangeable bushing (21), and of a drive for moving the holding tool (80) back and forth between a neutral position and a counter-holding position in which the counter-holding surface (81) comes into rotation-locking bearing contact with the threaded bolt (5).

23. Multi-screwing device according to Claim 22, **characterized in that** each screwing tool (10, 20) is provided with its own holding tool (80) and its own drive of the holding tool (80).

24. Multi-screwing device according to Claim 23, **characterized in that** the drives of the holding tools (80) are coupled to the movement of the screwing tools (10, 20) along their tool axes (A10, A20).

## Revendications

1. Procédé de serrage de raccords à vis dont les axes de vis (A) sont disposés dans des positions fixes les unes par rapport aux autres, et qui se composent respectivement d'un boulon fileté (5) et d'un écrou (6) vissé sur le filetage (5A) de celui-ci et en appui sur une base (U), en faisant appel à un dispositif de vissage multiple (1) pourvu d'un premier outil de vissage (10) et d'au moins un deuxième outil de vissage (20) supplémentaire, les outils de vissage (10, 20) présentant respectivement
- une douille interchangeable (21) disposée dans l'outil de vissage (10, 20) en rotation autour d'un axe d'outil (A10, A20) et sur laquelle est réalisé un extracteur (23) pouvant être vissé sur une section longitudinale (L) du filetage (5A),
- un dispositif d'entraînement en rotation (45) pour le vissage de la douille interchangeable (21) sur le filetage (5A) et pour son dévissage du filetage (5A),
- des moyens d'allongement longitudinal du boulon fileté (5) en ce que la douille interchangeable (21) exerce une traction le long de l'axe d'outil (A10, A20),
- un outil à engagement positif pouvant être couplé avec l'écrou (6) pour le resserrage de l'écrou (6),
**caractérisé en ce que** les outils de vissage (10, 20) sont mobiles respectivement au moyen d'un dispositif d'entraînement longitudinal (50a, 50b) dans la direction longitudinale de leurs axes d'outil (A10, A20), et les outils de vissage (10, 20) sont mobiles au moyen d'au moins un servomoteur (60a, 60b) l'un par rapport à l'autre dans une direction qui est perpendiculaire à au moins l'un des axes d'outil (A10, A20),
dans lequel à un instant, les deux outils de vissage (10, 20) en même temps sont en appui sur la base (U), et la douille interchangeable (21) du premier outil de vissage (10) ainsi que la douille interchangeable (21) du deuxième outil de vissage (20) sont respectivement vissées sur le filetage (5A) d'un boulon fileté (5),
et dans lequel, pour une position inchangée du deuxième outil de vissage (20), les étapes suivantes s'ensuivent :
a) dévisser la douille interchangeable (21) du premier outil de vissage (10) du boulon fileté (5) au moyen du dispositif d'entraînement en rotation (45), et relever le premier outil de vissage (10) au moyen du dispositif d'entraînement longitudinal (50a) ;
b) déplacer le premier outil de vissage (10) au moyen du servomoteur (60a, 60b) par rapport au deuxième outil de vissage (20) jusqu'à une nouvelle position dans laquelle l'axe d'outil (A10) du premier outil de vissage (10) est aligné sur l'axe de vis (A) d'un autre boulon fileté (5) ;
c) dans la nouvelle position, abaisser le premier outil de vissage (10) au moyen du dispositif d'entraînement longitudinal (50a), et visser la douille interchangeable (21) sur l'autre boulon fileté (5) au moyen du dispositif d'entraînement en rotation (45) ;
d) allonger de façon longitudinale l'autre boulon fileté (5) **en ce que** la douille interchangeable (21) exerce une traction, et tout en maintenant l'allongement longitudinal, resserrer l'écrou (6) ;
e) répéter les étapes a) à d), cette fois pour le deuxième outil de vissage (20) et pour une position inchangée du premier outil de vissage (10).

2. Procédé selon la revendication 1, **caractérisé par** une commande de déplacement de l'outil de vissage (10, 20) respectif jusqu'à la nouvelle position, la commande étant effectuée par commande par capteur au moyen d'un capteur (70) réalisé pour localiser le boulon fileté (5).

3. Procédé selon la revendication 1 ou 2, **caractérisé par** un actionnement électrique, hydraulique ou pneumatique du servomoteur (60a, 60b).

4. Procédé selon l'une quelconque des revendications précédentes, **caractérisé en ce que** la distance des axes d'outil (A10, A20) l'un par rapport à l'autre est modifiée au moyen du servomoteur (60a, 60b).

5. Procédé selon la revendication 4, **caractérisé en ce que** la modification de la distance des axes d'outil (A10, A20) est effectuée au cours d'un déplacement linéaire.

6. Procédé selon la revendication 4, **caractérisé en ce que** la modification de la distance des axes d'outil (A10, A20) est effectuée au cours d'un déplacement en forme d'arc ou d'une combinaison de deux déplacements en forme d'arc.

7. Procédé selon la revendication 6, **caractérisé en ce que** les outils de vissage (10, 20) sont disposés sur un support (40), et **en ce que** les déplacements en forme d'arc sont effectués par un pivotement des outils de vissage (10, 20) par rapport au support (40).

8. Procédé selon l'une quelconque des revendications précédentes, **caractérisé par** un actionnement électrique, hydraulique ou pneumatique du dispositif d'entraînement longitudinal (50a, 50b).

9. Procédé selon l'une quelconque des revendications précédentes, **caractérisé en ce que** le vissage et le dévissage de la douille interchangeable (21) sont effectués au moyen d'un dispositif d'entraînement en rotation (45) associé uniquement à l'outil de vissage (10, 20) respectif.

10. Procédé selon l'une quelconque des revendications précédentes, **caractérisé par** un dispositif anti-rotation pourvu d'un outil de retenue (80) pouvant avancer et reculer entre une position de repos et une position de maintien, dans lequel, pendant la durée du vissage de la douille interchangeable (21), une surface de maintien (81) réalisée sur l'outil de retenue (80) est mise en butée verrouillée en rotation contre le boulon fileté (5), l'endroit de la mise en butée étant différent de la section longitudinale (L) du filetage (5A) vissée sur la douille interchangeable (21).

11. Procédé selon la revendication 10, **caractérisé par** une commande de robot pour déplacer l'outil de vissage (10, 20) respectif jusqu'à la nouvelle position, la commande de robot commandant également l'avance et le recul de l'outil de retenue (80).

12. Dispositif de vissage multiple pour des raccords à vis dont les axes de vis (A) sont associés à des positions fixes les unes par rapport aux autres et qui se composent respectivement d'un boulon fileté (5) et d'un écrou (6) vissé sur le filetage (5A) de celui-ci et en appui sur une base (U), comprenant un premier outil de vissage (10) et au moins un deuxième outil de vissage (20) supplémentaire, les outils de vissage (10, 20) présentant respectivement
- une douille interchangeable (21) disposée dans l'outil de vissage (10, 20) en rotation autour d'un axe d'outil (A10, A20) et sur laquelle est réalisé un extracteur (23) pouvant être vissé sur une section longitudinale (L) du filetage (5A),
- un dispositif d'entraînement en rotation (45) pour le vissage de la douille interchangeable (21) sur le filetage (5A) et pour son dévissage du filetage (5A),
- des moyens d'allongement longitudinal du boulon fileté (5) en ce que la douille interchangeable (21) exerce une traction le long de l'axe d'outil (A10, A20),
- un outil à engagement positif pouvant être couplé avec l'écrou (6) pour le resserrage de l'écrou (6),
**caractérisé en ce que** les outils de vissage (10, 20) sont réalisés de manière mobile respectivement au moyen d'un dispositif d'entraînement longitudinal (50a, 50b) dans la direction longitudinale de leurs axes d'outil (A10, A20), et **en ce que** les outils de vissage (10, 20) sont mobiles au moyen d'au moins un servomoteur (60a, 60b) l'un par rapport à l'autre dans une direction qui est perpendiculaire à au moins l'un des axes d'outil (A10, A20).

13. Dispositif de vissage multiple selon la revendication 12, **caractérisé en ce qu'**un servomoteur (60a, 60b) propre est associé à chaque outil de vissage (10, 20).

14. Dispositif de vissage multiple selon la revendication 12 ou 13, **caractérisé en ce que** le servomoteur (60a, 60b) est actionné de manière électrique, hydraulique ou pneumatique.

15. Dispositif de vissage multiple selon l'une quelconque des revendications 12 à 14, **caractérisé en ce que** les outils de vissage (10, 20) sont disposés sur un support (40), et **en ce qu'**au moins l'un des outils de vissage (10, 20) est mobile au moyen du servomoteur (60a, 60b) par rapport au support (40).

16. Dispositif de vissage multiple selon la revendication 15, **caractérisé en ce qu'**au moins l'un des outils de vissage (10, 20) est fixé à l'extrémité libre d'un bras (61, 62) qui est pivotant autour d'un axe (41, 42) disposé sur le support (40).

17. Dispositif de vissage multiple selon la revendication 16, **caractérisé en ce que** les outils de vissage (10, 20) sont fixés respectivement à l'extrémité libre d'un bras (61, 62) qui est pivotant autour d'un axe (41, 42) disposé sur le support (40).

18. Dispositif de vissage multiple selon la revendication 16 ou 17, **caractérisé en ce que** les dispositifs d'entraînement longitudinal (50a, 50b) sont réalisés indépendamment l'un de l'autre afin de déplacer le bras (61, 62) respectif en parallèle à la direction longitudinale de l'axe (41, 42).

19. Dispositif de vissage multiple selon l'une quelconque des revendications 12 à 18, **caractérisé en ce qu'**il est composé d'un module d'outil (1.1) qui regroupe les outils de vissage (10, 20), y compris les moyens d'allongement longitudinal du boulon fileté (5), les dispositifs d'entraînement en rotation (45), les dispositifs d'entraînement longitudinal (50a, 50b) et les servomoteurs (60a, 60b), et d'un module d'alimentation (1.2) physiquement séparé qui regroupe au moins l'alimentation en énergie pour faire fonctionner les moyens d'allongement longitudinal du boulon fileté (5), et **en ce que** comme composant de l'alimentation en énergie, une conduite d'alimentation (85), de préférence une conduite d'alimentation réalisée de manière flexible, mène du module d'alimentation (1.2) au module d'outil (1.1).

20. Dispositif de vissage multiple selon la revendication 19, **caractérisé en ce que** le composant du module d'alimentation (1.2) est en outre une alimentation en énergie pour les dispositifs d'entraînement en rotation (45), les dispositifs d'entraînement longitudinal (50a, 50b) et les servomoteurs (60a, 60b), et **en ce que** comme composant de cette alimentation en énergie, une deuxième conduite d'alimentation (86), de préférence réalisée de manière flexible, mène du module d'alimentation (1.2) au module d'outil (1.1).

21. Dispositif de vissage multiple selon la revendication 19 ou 20, **caractérisé en ce que** le module d'alimentation (1.2) est réalisé de manière à pouvoir rouler en parallèle à la base (U), de préférence par le biais de roulettes ou d'éléments de roue (90) montés en rotation sur le module d'alimentation, et **en ce que** le module d'alimentation (1.2) est relié mécaniquement au module d'outil (1.1) par une tringlerie de pression ou de traction (91) réalisée de manière flexible ou articulée.

22. Dispositif de vissage multiple selon l'une quelconque des revendications 12 à 21, **caractérisé par** un dispositif anti-rotation composé d'un outil de retenue (80) sur lequel est réalisée une surface de maintien (81) pouvant être mise en butée contre le boulon fileté (5) à un endroit qui est différent de la section longitudinale (L) du filetage (5A), vissée sur la douille interchangeable (21), ainsi que d'un dispositif d'entraînement pour faire avancer et reculer l'outil de retenue (80) entre une position de repos et une position de maintien dans laquelle la surface de maintien (81) vient en butée verrouillée en rotation contre le boulon fileté (5).

23. Dispositif de vissage multiple selon la revendication 22, **caractérisé en ce que** chaque outil de vissage (10, 20) est muni de son propre outil de retenue (80) et de son propre dispositif d'entraînement de l'outil de retenue (80).

24. Dispositif de vissage multiple selon la revendication 23, **caractérisé en ce que** les dispositifs d'entraînement des outils de retenue (80) sont couplés avec le déplacement des outils de vissage (10, 20) le long de leurs axes d'outil (A10, A20).
